# EUROPEAN PATENT APPLICATION

(11) **EP 1 995 219 A1**
(43) Date of publication of application: **26.11.2008**
(21) Application number: 08154700.2
(22) Date of filing: 17.04.2008
(51) Int. Cl.: C02F 1/42, D06F 39/00, C02F 1/461

(54) **Water softener and washing machine having the same**

(30) Priority: 22.05.2007 KR 20070049661; 05.06.2007 KR 20070055242
(71) Applicant: Samsung Electronics Co., Ltd., Suwon-si, Gyeonggi-Do (KR)
(72) Inventor: Hahm, Jung Yoon, Suji-fu, Yingin-si Gyeonggi-do (KR); Urazaev, Vladimir, Suwon-si Gyeonggi-do (KR); Jeong, Jin Ha, Yongin-si Gyeonggi-do (KR); Nojima, Hideo, Seongnam-si Gyeonggi-do (KR)
(74) Representative: Grünecker, Kinkeldey, Stockmair & Schwanhäusser Anwaltssozietät

(57) **Abstract**

A water softener which uses ion exchange resins to soften water and a washing machine having the same are disclosed. The water softener and the washing machine having the same include an ion exchange unit including ion exchange resins therein, the ion exchange unit including a first ion exchange unit and a second ion exchange unit which alternately perform softening of water and regeneration of the ion exchange resins. Since any one of the first ion exchange unit and the second ion exchange unit performs softening of water and the other one thereof performs regeneration of the ion exchange resins, it is possible to continuously supply soft water.

## Description

### BACKGROUND

### 1. Field

The present invention relates to a water softener and a washing machine having the same, and more particularly to a water softener which uses ion exchange resins to soften water and a washing machine having the same.

### 2. Description of the Related Art

A water softener is a device which changes a property of water by reducing ionized hard water materials, that is, ions such as Ca2+, Mg2+, Fe3+ and Al3+, included in water. The water softener is disposed in various machines such as a washing machine, which are necessary to use soft water such that a detergent can be easily dissolved in water.

As a softening method of the water softener, Korean Patent Laid-open Publication No. 2003-75610 discloses a method of using ion exchange resins to soften water. An ion exchange resin (IER)-type water softener uses ion exchange resins to exchange ionized hard water materials with Na+ ions attached to the ion exchange resins such that the ionized hard water materials can be adsorbed to the ion exchange resins. Accordingly, water containing the ionized hard water materials can be converted into soft water.

However, in the water softener using the ion exchange resins, when the ionized hard water materials of an amount larger than a specific amount are adsorbed to the ion exchange resins, an ion adsorption capacity of the ion exchange resins is reduced. Accordingly, it is necessary to regenerate the ion exchange resins by injecting a NaCI solution to the ion exchange resins such that the ionized hard water materials are ion-exchanged with Na+ ions again to be separated from the ion exchange resins and discharged to the outside.

Thus, in the conventional water softener, while the ion exchange resins are regenerated by injecting a NaCI solution, since regeneration water containing a large amount of ionized hard water materials is produced, the regeneration water should be discharged to the outside.

Accordingly, while the ion exchange resins are regenerated, it is impossible to produce soft water and the supply of soft water is temporarily interrupted.

Further, in the conventional water softener, it is necessary to inject a NaGI solution to regenerate the ion exchange resins, thereby causing inconvenience in use.

### SUMMARY

The present embodiments have been made in order to solve the above problems. It is an aspect of the embodiments to provide a water softener capable of continuously supplying soft water and a washing machine having the same.

Further, it is another aspect of the embodiments to provide a water softener wherein there is no need to inject a NaCI solution to regenerate ion exchange resins and a washing machine having the same.

Additional aspects and/or advantages will be set forth in part in the description which follows and, in part, will be obvious from the description, or may be learned by practice of the invention.

The foregoing and/or other aspects are achieved by providing a water softener, including: an ion exchange unit including ion exchange resins therein, the ion exchange unit including a first ion exchange unit and a second ion exchange unit alternately performing softening of water and regeneration of the ion exchange resins.

The water softener may further include an acid water production unit which produces acid water containing a high concentration of positive ions above a predetermined concentration level and selectively supplies the acid water to any one of the first ion exchange unit and the second ion exchange unit.

The first ion exchange unit and the second ion exchange unit may be respectively connected to a first suction guide line and a second suction guide line such that water from an external water supply source and acid water from the acid water production unit are alternately supplied to the first ion exchange unit and the second ion exchange unit.

The water softener may further include a water supply line and an acid water guide line, one end of the water supply line may be selectively connected to any one of the first suction guide line and the second suction guide line and the other end of the water supply line may be connected to the external water supply source, and one end of the acid water guide line may be selectively connected to the other one of the first suction guide line and the second suction guide line and the other end of the acid water guide line may be connected to the acid water production unit.

The water softener may further include a first four-way valve which is installed between the first suction guide line and the second suction guide line and between the water supply line and the acid water guide line such that any one of the first suction guide line and the second suction guide line may be selectively connected to any one of the water supply line and the acid water guide line, and the other one of the first suction guide line and the second suction guide line may be selectively connected to the other one of the water supply line and the acid water guide line.

The first ion exchange unit and the second ion exchange unit may be respectively connected to a first discharge guide line and a second discharge guide line which alternately discharge soft water and regeneration water produced in regeneration of the ion exchange resins.

The water softener may further include a soft water discharge line and a regeneration water discharge line, one end of the soft water discharge line may be selectively connected to any one of the first discharge guide line and the second discharge guide line and the other end of the soft water discharge line may be connected to a soft water using unit which uses soft water, and one end of the regeneration water discharge line may be selectively connected to the other one of the first discharge guide line and the second discharge guide line and the other end of the regeneration water discharge line may be connected to a water drain line to guide water to be discharged to an outside.

The water softener may further include a second four-way valve which may be installed between the first discharge guide line and the second discharge guide line and between the soft water discharge line and the regeneration water discharge line such that any one of the first discharge guide line and the second discharge guide line may be selectively connected to any one of the soft water discharge line and the regeneration water discharge line, and the other one of the first discharge guide line and the second discharge guide line may be selectively connected to the other one of the soft water discharge line and the regeneration water discharge line.

The acid water production unit may include an acid water production chamber which forms a flow path therein to pass water therethrough, a plus electrode which is disposed at one inner side of the acid water production chamber to be applied with a plus voltage, a minus electrode which is disposed at the other inner side of the acid water production chamber to be applied with a minus voltage, a negative ion exchange film which is disposed to define a space at one inner side of the acid water production chamber to selectively pass negative ions, and a positive ion exchange film which is disposed to define a space at the other inner side of the acid water production chamber to selectively pass positive ions.

An inner space of the acid water production chamber may be sectionalized into an acid water production room to produce acid water containing a high concentration of positive ions above a predetermined concentration level, an alkali water production room to produce alkali water containing a high concentration of negative ions above a predetermined concentration level, and a soft water production room to produce soft water by the negative ion exchange film and the positive ion exchange film.

The acid water production unit may include an acid water production chamber which forms a flow path therein to pass water therethrough, a plus electrode which is disposed at one inner side of the acid water production chamber to be applied with a plus voltage, a minus electrode which is disposed at the other inner side of the acid water production chamber to be applied with a minus voltage, and at least one positive ion exchange film and at least one negative ion exchange film which are alternately arranged between the plus electrode and the minus electrode to selectively pass positive ions and negative ions, respectively. Further, an inner space of the acid water production chamber may be sectionalized into an acid water production room including the plus electrode therein, an alkali water production room including the minus electrode therein, at least one soft water production room to soften water by removing positively ionized and negatively ionized materials and an ion concentration room into which the positively ionized and negatively ionized materials flow, by the at least one positive ion exchange film and the at least one negative ion exchange film. Further, acid water discharged from the acid water production room may be selectively supplied to the soft water production room to remove deposits deposited on the at least one positive ion exchange film and the at least one negative ion exchange film forming the soft water production room.

The acid water production unit may include a water supply line which supplies water to each of the acid water production room, the alkali water production room, the at least one soft water production room and the ion concentration room, an acid water supply line which supplies acid water to the at least one soft water production room, an auxiliary soft water discharge line which guides water discharged from the at least one soft water production room, an ionized water discharge line which transfers water discharged from the alkali water production room and the ion concentration room to an outside, an acid water discharge line which guides acid water discharged from the acid water production room and a three-way valve which selectively connects the acid water discharge line to any one of the acid water guide line and the acid water supply line.

The soft water production room may include ion exchange resins which are ion-exchanged with ionized materials included in water to adsorb the ionized materials.

The foregoing and/or other aspects are achieved by providing a washing machine, including: a housing; a water tub containing water disposed within the housing; a detergent box containing a detergent communicating with the water tub; and a water softener, having an ion exchange unit to soften water through ion exchange resins, which converts water transferred from an external water supply source into soft water and supplies the soft water to any one of the water tub and the detergent box, the ion exchange unit including a first ion exchange unit and a second ion exchange unit which alternately perform softening of water and regeneration of the ion exchange resins.

### BRIEF DESCRIPTION OF THE DRAWINGS

These and/or other aspects and advantages will become apparent and more readily appreciated from the following description of the embodiments, taken in conjunction with the accompanying drawings, of which:
FIG. 1 illustrates a cross-sectional view of a washing machine having a water softener according to the present embodiments;
FIGS. 2 and 3 schematically show a configuration and an operation of the water softener according to the present embodiments;
FIG. 4 schematically shows an ion exchange unit applied to the water softener according to the present embodiments;
FIG. 5 schematically shows an acid water production unit applied to a water softener according to a first embodiment; and
FIGS. 6 and 7 schematically show an acid water production unit applied to a water softener according to a second embodiment.

### DETAILED DESCRIPTION OF THE EMBODIMENTS

Reference will now be made in detail to the embodiments, examples of which are illustrated in the accompanying drawings, wherein like reference numerals refer to like elements throughout. The embodiments are described below to explain the present invention by referring to the figures.

Hereinafter, a water softener according to a first embodiment will be described in detail with reference to the accompanying drawings.

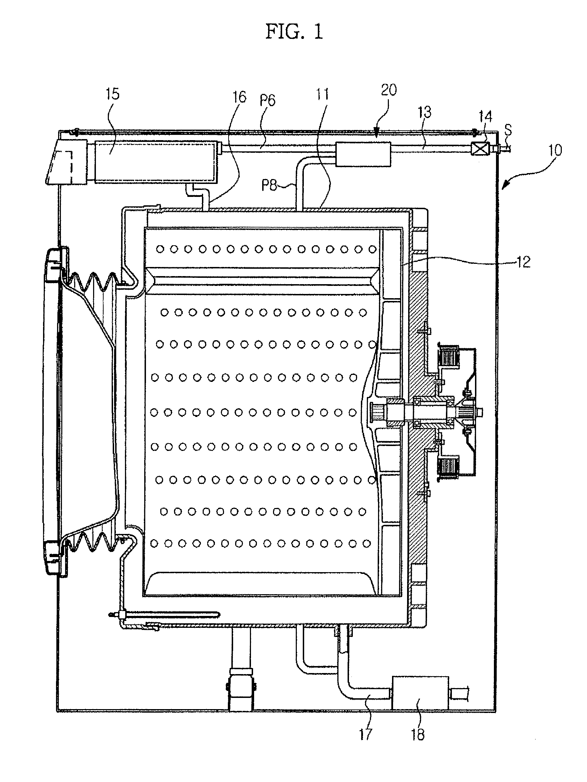

As shown in FIG. 1, a washing machine having the water softener according to the present invention includes a housing 10 forming an external appearance of the washing machine, a water tub 11 which is suspendedly installed in the housing 10 to contain water, and a rotary drum 12 which is rotatably installed in the water tub 11 and rotates with laundry loaded therein to wash the laundry.

At an inner upper portion of the housing 10, there is provided a water supply line 13 which is protruded outward from the housing 10 and has one end connected to an external water supply source S to supply water to be used in a washing operation, a water supply valve 14 which opens and closes the water supply line 13, a water softener 20 which is connected to the other end of the water supply line 13 and is supplied with water from the external water supply source S through the water supply line 13 to soften the water, a detergent box 15 containing a detergent, which is supplied with soft water transferred from the water softener 20 and mixes the water with the detergent to produce washing water, and a washing water supply line 16 which guides the washing water discharged from the detergent box 15 to the water tub 11. At an inner lower portion of the housing 10, there are provided a water drain line 17 which guides the water used in the washing operation to be discharged from the water tub, and a water drain pump 18 which is disposed on the water drain line 17 to pump the water out through the water drain line 17.

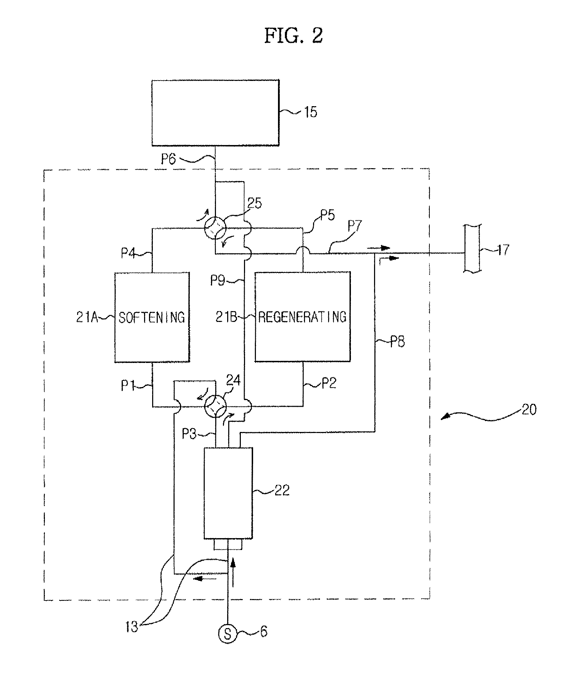

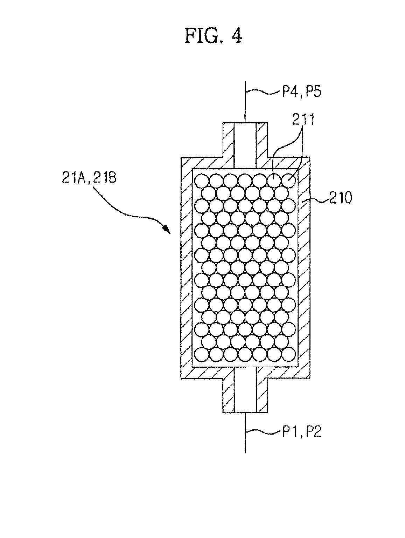

Further, as shown in FIG. 2, the water softener 20 includes ion exchange units 21A and 21 B having ion exchange resins 211 (see FIG. 4) which adsorb and remove ionized hard water materials by exchanging ions, and an acid water production unit 22 which produces acid water containing a large amount or a high concentration of positive ions H+, the concentration of positive ions H+ being above a predetermined concentration level, and supplies the acid water to the ion exchange units 21A and 21 B to regenerate the ion exchange units 21A and 21 B. In this embodiment, the ion exchange units 21A and 21 B include a first ion exchange unit 21A and a second ion exchange unit 21 B such that soft water is continuously supplied to a soft water using unit such as the detergent box 15 which uses soft water. The first ion exchange unit 21A and the second ion exchange unit 21 B alternately perform softening of water and regeneration of the ion exchange resins 211. Accordingly, in the water softener 20 according to the present embodiment, acid water produced in the acid water production unit 22 is supplied to the first ion exchange unit 21A or the second ion exchange unit 21 B, which is required to be regenerated, to regenerate the ion exchange resins 211 in the ion exchange units 21A and 21 B. Thus, it is possible to omit an operation of injecting a NaCl solution to regenerate the ion exchange resins 211. Further, since any one of the first ion exchange unit 21A and the second ion exchange unit 21 B performs softening of water, it is possible to continuously produce soft water.

The first ion exchange unit 21 A and the second ion exchange unit 21 B are respectively connected to a first suction guide line P1 and a second suction guide line P2, which are selectively connected to any one of the water supply line 13 and the acid water production unit 22, such that the water from the external water supply source S and the acid water produced in the acid water production unit 22 are alternately supplied thereto. In this case, the water softener 20 includes an acid water guide line P3 and a first four-way valve 24 such that the first suction guide line P1 or the second suction guide line P2 are selectively connected to the acid water production unit 22. One end of the acid water guide line P3 is selectively connected to any one of the first suction guide line P1 and the second suction guide line P2, and the other end of the acid water guide line P3 is connected to the acid water production unit 22 to guide acid water produced in the acid water production unit 22. The first four-way valve 24 is installed between the first suction guide line P1 and the second suction guide line P2 and between the water supply line 13 and the acid water guide line P3 such that any one of the first suction guide line P1 and the second suction guide line P2 is selectively connected to any one of the water supply line 13 and the acid water guide line P3, and the other one of the first suction guide line P1 and the second suction guide line P2 is selectively connected to the other one of the water supply line 13 and the acid water guide line P3.

Further, the first ion exchange unit 21A and the second ion exchange unit 21 B are respectively connected to a first discharge guide line P4 and a second discharge guide line P5. The first discharge guide line P4 (or the second discharge guide line P5) alternately discharges soft water discharged from the ion exchange unit 21A (or 21 B) which performs the softening of water and regeneration water containing a large amount of positive ions discharged from the ion exchange unit 21A (or 21 B) which performs the regeneration of the ion exchange resins 211.

Further, the water softener 20 includes a soft water discharge line P6, a regeneration water discharge line P7 and a second four-way valve 25. One end of the soft water discharge line P6 is selectively connected to any one of the first discharge guide line P4 and the second discharge guide line P5, and the other end of the soft water discharge line P6 is connected to the detergent box 15 serving as a soft water using unit that uses soft water. One end of the regeneration water discharge line P7 is selectively connected to the other one of the first discharge guide line P4 and the second discharge guide line P5, and the other end of the regeneration water discharge line P7 is connected to the water drain line 17 to guide water to be discharged to the outside. The second four-way valve 25 is installed between the first discharge guide line P4 and the second discharge guide line P5 and between the soft water discharge line P6 and the regeneration water discharge line P7 such that any one of the first discharge guide line P4 and the second discharge guide line P5 is selectively connected to any one of the soft water discharge line P6 and the regeneration water discharge line P7, and the other one of the first discharge guide line P4 and the second discharge guide line P5 is selectively connected to the other one of the soft water discharge line P6 and the regeneration water discharge line P7.

As shown in FIG. 4, each of the ion exchange units 21A and 21 B includes an ion exchange chamber 210 which forms a flow path to pass water therethrough and is filled with the ion exchange resins 211. While water passes through the ion exchange chamber 210, ionized hard water materials included in the water are ion-exchanged with the ion exchange resins 211 to be adsorbed to the ion exchange resins 211. Accordingly, it is possible to remove the hard water materials from the water, thereby obtaining soft water.

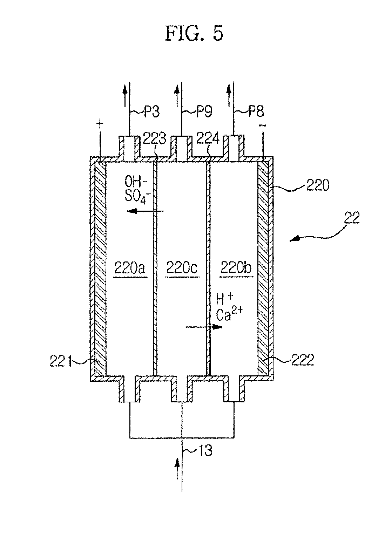

As shown in FIG. 5, the acid water production unit 22 includes an acid water production chamber 220 which forms a flow path therein to pass water therethrough, a plus electrode 221 which is disposed at one inner side of the acid water production chamber 220 opposite the one inner side to be applied with a plus voltage, a minus electrode 222 which is disposed at the other inner side of the acid water production chamber 220 to be applied with a minus voltage, a negative ion exchange film 223 which is disposed to define a space at one inner side of the acid water production chamber 220 to selectively pass negative ions, and a positive ion exchange film 224 which is disposed to define a space at the other inner side of the acid water production chamber 220 to selectively pass positive ions. The inner space of the acid water production chamber 220 is sectionalized into an acid water production room 220a, an alkali water production room 220b and a soft water production room 220c by the negative ion exchange film 223 and the positive ion exchange film 224. The acid water production room 220a includes the plus electrode 221 therein to produce acid water containing a large amount of positive ions. The alkali water production room 220b includes the minus electrode 222 therein to produce alkali water containing a large amount of negative ions. The soft water production room 220c is formed between the negative ion exchange film 223 and the positive ion exchange film 224 to produce soft water by removing both negatively ionized and positively ionized materials.

In this case, each of the acid water production room 220a, the alkali water production room 220b and the soft water production room 220c of the acid water production chamber 220 is individually connected to the water supply line 13 to be supplied with water. The acid water production room 220a is connected to the acid water guide line P3. Further, the acid water production chamber 220 is connected to an ionized water discharge line P8 and an auxiliary soft water discharge line P9. One end of the ionized water discharge line P8 is connected to the alkali water production room 220b, and the other end of the ionized water discharge line P8 is connected to the regeneration water discharge line P7 to discharge ionized water such as alkali water produced in the alkali water production room 220b through the regeneration water discharge line P7. One end of the auxiliary soft water discharge line P9 is connected to the soft water production room 220c, and the other end of the auxiliary soft water discharge line P9 is connected to the soft water discharge line P6 to transfer soft water produced in the soft water production room 220c to the detergent box 15 serving as a soft water using unit through the soft water discharge line P6.

Hereinafter, an operation of the water softener having the above configuration according to the present embodiment will be explained with reference to the drawings.

First, as shown in FIG. 2, when the softening of water is performed in the first ion exchange unit 21A and the regeneration of the ion exchange resins 211 is performed in the second ion exchange unit 21 B, the first four-way valve 24 connects the supply line 13 to the first suction guide line P1 and also connects the acid water guide line P3 to the second suction guide line P2. Further, the second four-way valve 25 connects the first discharge guide line P4 to the soft water discharge line P6 and also connects the second discharge guide line P5 to the regeneration water discharge line P7. Accordingly, water from the external water supply source S is transferred to the first ion exchange unit 21A through the supply line 13 and the first suction guide line P1 to be converted into soft water in the first ion exchange unit 21A. Then, the soft water is transferred to the detergent box 15 serving as a soft water using unit through the first discharge guide line P4 and the soft water discharge line P6. Acid water produced in the acid water production unit 22 is transferred to the second ion exchange unit 21 B through the acid water guide line P3 and the second suction guide line P2 to regenerate the ion exchange resins 211 in the second ion exchange unit 21 B. In this case, in a process of regenerating the ion exchange resins 211, regeneration water containing a large amount of ionized materials is produced in the second ion exchange unit 21 B. The regeneration water is discharged to the water drain line 17 through the second discharge guide line P5 and the regeneration water discharge line P7.

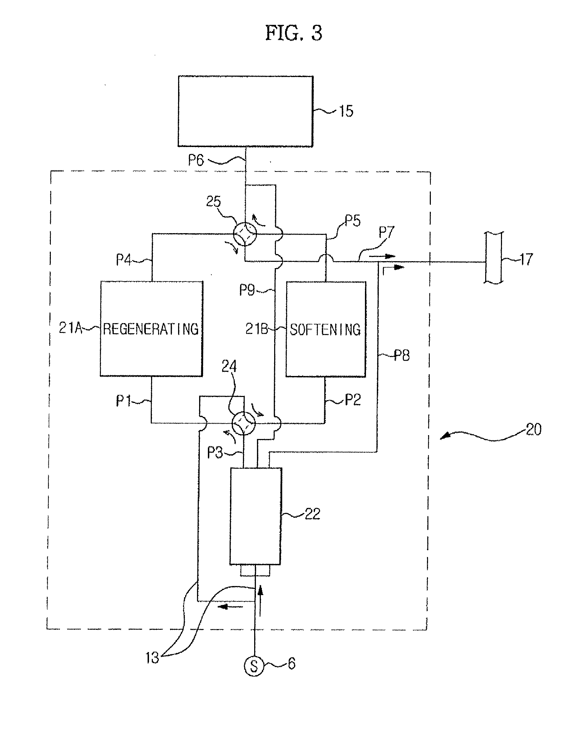

Next, when it is necessary to regenerate the ion exchange resins 211 in the first ion exchange unit 21A, as shown in FIG. 3, the first four-way valve 24 connects the water supply line 13 to the second suction guide line P2 and also connects the acid water guide line P3 to the first suction guide line P1. Further, the second four-way valve 25 connects the second discharge guide line P5 to the soft water discharge line P6 and also connects the first discharge guide line P4 to the regeneration water discharge line P7. The softening of water is performed in the second ion exchange unit 21B and the regeneration of the ion exchange resins 211 is performed in the first ion exchange unit 21A. Accordingly, water from the external water supply source S is transferred to the second ion exchange unit 21 B through the supply line 13 and the second suction guide line P2 to be converted into soft water in the second ion exchange unit 21 B. Then, the soft water is transferred to the detergent box 15 serving as a soft water using unit through the second discharge guide line P5 and the soft water discharge line P6. Acid water produced in the acid water production unit 22 is transferred to the first ion exchange unit 21A through the acid water guide line P3 and the first suction guide line P1 to regenerate the ion exchange resins 211 in the first ion exchange unit 21A. In this case, in a process of regenerating the ion exchange resins 211, regeneration water containing a large amount of ionized materials is produced in the first ion exchange unit 21A. The regeneration water is discharged to the water drain line 17 through the first discharge guide line P4 and the regeneration water discharge line P7.

Thus, as described above, the first ion exchange unit 21A and the second ion exchange unit 21 B alternately perform the softening of water and the regeneration of the ion exchange resins 211 by controlling the first four-way valve 24 and the second four-way valve 25, thereby continuously supplying soft water to the detergent box 15 serving as a soft water using unit.

Further, as described above, while the first ion exchange unit 21A and the second ion exchange unit 21 B alternately perform the softening of water and the regeneration of the ion exchange resins 211, in the acid water production unit 22, alkali water is produced in the alkali water production room 220b and soft water is produced in the soft water production room 220c. The alkali water is discharged to the water drain line 17 through the ionized water discharge line P8 and the regeneration water discharge line P7. The soft water is transferred to the detergent box 15 serving as a soft water using unit through the auxiliary soft water discharge line P9 and the soft water discharge line P6.

Although the detergent box 15 serves as a soft water using unit in this embodiment, it is not limited thereto. For example, the soft water discharge line P6 may be connected to the water tub 11 such that soft water is directly supplied to the water tub 11.

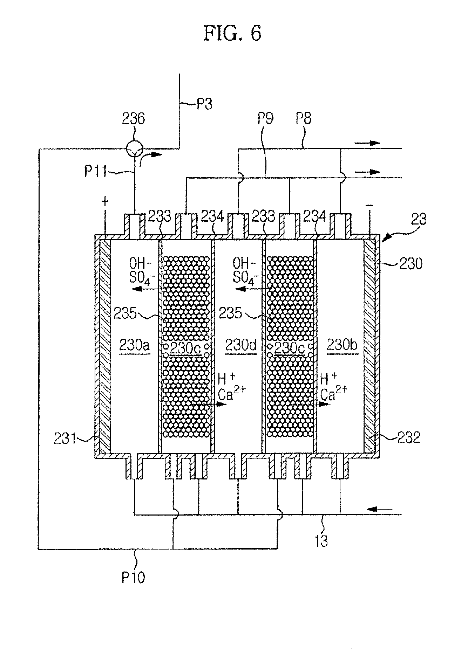

FIG. 6 illustrates an acid water production unit 23 applied to a water softener according to a second embodiment.

The acid water production unit 23 includes an acid water production chamber 230 which forms a flow path therein to pass water therethrough, a plus electrode 231 which is disposed at one inner side of the acid water production chamber 230 to be applied with a plus voltage, a minus electrode 232 which is disposed at the other inner side of the acid water production chamber 230 to be applied with a minus voltage, and a plurality of negative ion exchange films 233 and a plurality of positive ion exchange films 234, which are alternately disposed to sectionalize an inner space of the acid water production chamber 230, to selectively pass negative ions and positive ions, respectively.

The inner space of the acid water production chamber 230 is sectionalized into an acid water production room 230a, an alkali water production room 230b, soft water production rooms 230c and an ion concentration room 230d by the negative ion exchange films 233 and the positive ion exchange films 234. The acid water production room 230a includes the plus electrode 231 therein to produce acid water containing a large amount or a high concentration of positive ions above a predetermined concentration level. The alkali water production room 230b includes the minus electrode 232 therein to produce alkali water containing a large amount or a high concentration of negative ions above a predetermined concentration level. Soft water is produced in the soft water production rooms 230c by removing negatively ionized and positively ionized materials, and the negatively ionized and positively ionized materials flow into the ion concentration room 230d. In this case, ion exchange resins 235, which are ion-exchanged with ionized hard water materials included in the water to adsorb the ionized hard water materials, are disposed in the soft water production rooms 230c.

Thus, ions such as Ca2+, Mg2+, H+, SO4- and OH-, for example, included in the water introduced into the soft water production rooms 230c are adsorbed to the ion exchange resins 235. Negative ions such as SO4- and OH-, for example, among the adsorbed ions pass through the negative ion exchange films 233 and move toward the plus electrode 231 disposed at one inner side of the acid water production chamber 230. Positive ions such as Ca2+, Mg2+ and H+, for example, pass through the positive ion exchange films 234 and move toward the minus electrode 232 disposed at the other inner side of the acid water production chamber 230. Accordingly, the negatively ionized and positively ionized materials are removed from the soft water production rooms 230c, thereby softening the water.

Further, in the acid water production unit 23 according to the present embodiment, acid water produced in the acid water production room 230a is selectively supplied to the soft water production rooms 230c to remove deposits such as calcium carbonate or magnesium hydroxide deposited on the positive ion exchange films 234 and the negative ion exchange films 233 forming the soft water production rooms 230c.

For this, each of the acid water production room 230a, the alkali water production room 230b, the soft water production rooms 230c and the ion concentration room 230d of the acid water production chamber 230 is individually connected to the water supply line 13 such that water is supplied to each of the acid water production room 230a, the alkali water production room 230b, the soft water production rooms 230c and the ion concentration room 230d. The ionized water discharge line P8 is connected to the alkali water production room 230b and the ion concentration room 230d to discharge alkali water produced in the alkali water production room 230b and ionized water produced in the ion concentration room 230d, respectively. Further, the acid water production unit 23 includes an acid water supply line P10, an acid water discharge line P11 and a three-way valve 236. The acid water supply line P10 supplies acid water to the soft water production rooms 230c. One end of the acid water discharge line P11 is connected to the acid water production room 230a, and the other end of the acid water discharge line P11 is selectively connected to any one of the acid water guide line P3 and the acid water supply line P10. The three-way valve 236 selectively connects the acid water discharge line P11 to any one of the acid water guide line P3 and the acid water supply line P10.

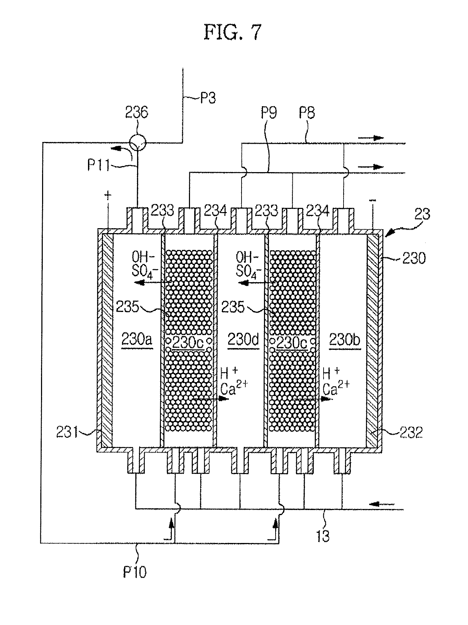

Thus, when the acid water production unit 23 according to the present embodiment performs the regeneration of the ion exchange unit 21A or 21 B, the acid water discharge line P11 and the acid water guide line P3 are connected to each other by the three-way valve 236. Accordingly, acid water discharged from the acid water production room 230a is transferred to the ion exchange unit 21A or 21 B. In this case, if it is necessary to remove the deposits deposited on the negative ion exchange films 233 and the positive ion exchange films 234 forming the soft water production rooms 230c, as shown in FIG. 7, the acid water discharge line P11 and the acid water supply line P10 are connected to each other by the three-way valve 236. Accordingly, acid water produced in the acid water production room 230a is supplied to the soft water production rooms 230c. Then, the deposits deposited on the negative ion exchange films 233 and the positive ion exchange films 234 are ion-exchanged with positive ions included in the acid water to become capable of being easily dissolved in water. Accordingly, the deposits are dissolved in water passing through the soft water production rooms 230c and discharged (removed) with water.

As described above, the water softener according to the present invention includes the first ion exchange unit and the second ion exchange unit each having the ion exchange resins. The softening of water is performed in any one of the first ion exchange unit and the second ion exchange unit, and the regeneration of the ion exchange resins is performed in the other one thereof. Accordingly, the present invention has an effect of continuously supplying soft water.

Further, the water softener according to the present invention includes the acid water production unit which produces acid water containing a large amount of positive ions and supplies the acid water to the ion exchange unit. The regeneration of the ion exchange resins included in the ion exchange unit is performed by the acid water produced in the acid water production unit. Accordingly, it is not necessary to inject a NaCl solution to regenerate the ion exchange resins, thereby providing convenience in use.

Further, the water softener according to the present invention supplies acid water to the soft water production room. Thus, there is an effect of removing the deposits deposited on the negative ion exchange films and the positive ion exchange films included in the acid water production unit.

Although a few embodiments have been shown and described, it would be appreciated by those skilled in the art that changes may be made in these embodiments without departing from the principles and spirit of the invention, the scope of which is defined in the claims and their equivalents.

## Claims

1. A water softener, comprising:
an ion exchange unit including ion exchange resins therein, the ion exchange unit including a first ion exchange unit and a second ion exchange unit alternately performing softening of water and regeneration of the ion exchange resins.

2. The water softener according to claim 1, further comprising an acid water production unit producing acid water containing a high concentration of positive ions above a predetermined concentration level and selectively supplying the acid water to any one of the first ion exchange unit and the second ion exchange unit.

3. The water softener according to claim 2, wherein the first ion exchange unit and the second ion exchange unit are respectively connected to a first suction guide line and a second suction guide line such that water from an external water supply source and acid water from the acid water production unit are alternately supplied to the first ion exchange unit and the second ion exchange unit.

4. The water softener according to claim 3, further comprising a water supply line and an acid water guide line, one end of the water supply line being selectively connected to any one of the first suction guide line and the second suction guide line and the other end of the water supply line being connected to the external water supply source, and one end of the acid water guide line being selectively connected to the other one of the first suction guide line and the second suction guide line and the other end of the acid water guide line being connected to the acid water production unit.

5. The water softener according to claim 4, further comprising a four-way valve installed between the first suction guide line and the second suction guide line and between the water supply line and the acid water guide line such that any one of the first suction guide line and the second suction guide line is selectively connected to any one of the water supply line and the acid water guide line, and the other one of the first suction guide line and the second suction guide line is selectively connected to the other one of the water supply line and the acid water guide line.

6. The water softener according to claim 3, wherein the first ion exchange unit and the second ion exchange unit are respectively connected to a first discharge guide line and a second discharge guide line which alternately discharge soft water and regeneration water produced in regeneration of the ion exchange resins.

7. The water softener according to claim 6, further comprising a soft water discharge line and a regeneration water discharge line, one end of the soft water discharge line being selectively connected to any one of the first discharge guide line and the second discharge guide line and the other end of the soft water discharge line being connected to a soft water using unit which uses soft water, and one end of the regeneration water discharge line being selectively connected to the other one of the first discharge guide line and the second discharge guide line and the other end of the regeneration water discharge line being connected to a water drain line to guide water to be discharged to an outside.

8. The water softener according to claim 7, further comprising a four-way valve installed between the first discharge guide line and the second discharge guide line and between the soft water discharge line and the regeneration water discharge line such that any one of the first discharge guide line and the second discharge guide line is selectively connected to any one of the soft water discharge line and the regeneration water discharge line, and the other one of the first discharge guide line and the second discharge guide line is selectively connected to the other one of the soft water discharge line and the regeneration water discharge line.

9. The water softener according to claim 2, wherein the acid water production unit includes an acid water production chamber forming a flow path therein to pass water therethrough, a plus electrode disposed at one inner side of the acid water production chamber to be applied with a plus voltage, a minus electrode disposed at the other inner side of the acid water production chamber to be applied with a minus voltage, a negative ion exchange film disposed to define a space at one inner side of the acid water production chamber to selectively pass negative ions, and a positive ion exchange film disposed to define a space at the other inner side of the acid water production chamber to selectively pass positive ions.

10. The water softener according to claim 9, wherein an inner space of the acid water production chamber is sectionalized into an acid water production room to produce acid water containing a high concentration of positive ions above a predetermined concentration level, an alkali water production room to produce alkali water containing a high concentration of negative ions above a predetermined concentration level, and a soft water production room to produce soft water by the negative ion exchange film and the positive ion exchange film.

11. The water softener according to claim 2, wherein the acid water production unit includes an acid water production chamber forming a flow path therein to pass water therethrough, a plus electrode disposed at one inner side of the acid water production chamber to be applied with a plus voltage, a minus electrode disposed at the other inner side of the acid water production chamber to be applied with a minus voltage, and at least one positive ion exchange film and at least one negative ion exchange film alternately arranged between the plus electrode and the minus electrode to selectively pass positive ions and negative ions, respectively, and
wherein an inner space of the acid water production chamber is sectionalized into an acid water production room including the plus electrode therein, an alkali water production room including the minus electrode therein, at least one soft water production room to soften water by removing positively ionized and negatively ionized materials and an ion concentration room into which the positively ionized and negatively ionized materials flow, by the at least one positive ion exchange film and the at least one negative ion exchange film, and
wherein acid water discharged from the acid water production room is selectively supplied to the at least one soft water production room to remove deposits deposited on the at least one positive ion exchange film and the at least one negative ion exchange film forming the at least one soft water production room.

12. The water softener according to claim 11, wherein the acid water production unit further includes a water supply line supplying water to each of the acid water production room, the alkali water production room, the at least one soft water production room and the ion concentration room, an acid water supply line supplying acid water to the at least one soft water production room, an auxiliary soft water discharge line guiding water discharged from the at least one soft water production room, an ionized water discharge line transferring water discharged from the alkali water production room and the ion concentration room to an outside, an acid water discharge line guiding acid water discharged from the acid water production room and a three-way valve selectively connecting the acid water discharge line to any one of the acid water guide line and the acid water supply line.

13. The water softener according to claim 11, wherein the at least one soft water production room includes ion exchange resins which are ion-exchanged with ionized materials included in water to adsorb the ionized materials.

14. A washing machine, comprising:
a housing;
a water tub containing water disposed within the housing;
a detergent box containing a detergent communicating with the water tub; and
a water softener, having an ion exchange unit to soften water through ion exchange resins and including a first ion exchange unit and a second ion exchange unit which alternately perform softening of water and regeneration of the ion exchange resins, converting water transferred from an external water supply source into soft water and supplying the soft water to any one of the water tub and the detergent box.

15. The washing machine according to claim 14, further comprising an acid water production unit producing acid water containing a high concentration of positive ions above a predetermined concentration level and selectively supplies the acid water to any one of the first ion exchange unit and the second ion exchange unit.
